# FASCICULE DE BREVET EUROPEEN

(11) **EP 0 441 701 B1**
(45) Date de publication et mention de la délivrance du brevet: **16.06.1993**
(21) Numéro de dépôt: 91400281.1
(22) Date de dépôt: 06.02.1991
(51) Int. Cl.: F16L 51/02

(54) **Structure tubulaire souple comportant une armature de renfort**
Flexible rohrförmige Struktur mit einer Verstärkungseinlage
Flexible tubular structure incorporating a reinforcing armature

(30) Priorité: 07.02.1990 FR 9001495
(43) Date de publication de la demande: 14.08.1991
(73) Titulaire: CAOUTCHOUC MANUFACTURE ET PLASTIQUES, F-78000 Versailles (FR)
(72) Inventeur: Joug, Roland, F-78370 Plaisir (FR)

(56) Documents cités:
- EP-A- 0 207 813

## Description

La présente invention est relative à un système d'ancrage des éléments de traction d'une structure tubulaire souple sur l'ouverture d'une paroi rigide, ledit ancrage étant exercé par appui axial sur un épaulement ou une bride après passage par une ouverture ménagée dans ladite paroi rigide. Dans la suite du texte, pour simplifier l'exposé de l'invention, le terme "manchon" sera utilisé pour définir la structure tubulaire souple, le terme "talon" définissant l'extrémité du manchon qui présente un diamètre supérieur à celui du manchon et prend appui sur la paroi rigide, ci-après désignée par le terme "contre-bride".

On connait des manchons avec talon souple, dans lesquels le talon comporte, généralement, une armature interne, c'est à dire noyée dans le caoutchouc, de forme annulaire, constituée de caoutchouc à module élevé, d'une bande de textile, d'un toron textile ou métallique ou encore d'un ressort souple. Ce type de renforcement est adopté pour rendre le talon déformable afin de permettre le montage des contre-brides après la fabrication du manchon, par passage forcé du talon dans l'alésage. L'inconvénient majeur de ces systèmes réside dans la nécessité d'un pincement entre deux plans de la bride plane, soit encore par utilisation d'une forme, obtenue par usinage, pour qu'une pièce rigide vienne prendre appui sur un diamètre intérieur à ce talon déformable, comme, par exemple, dans les membranes de suspensions pneumatiques décrites dans le brevet FR 2 127 561 de Continental ou dans les manchons compensateurs de dilatation décrits dans les brevets FR 2 280 853 de Berghoffer ou FR 2 033 789 de Pirelli ou FR 2 006 730 de Continental.

Ces systèmes de manchons à talons souples nécessitent donc des techniques de montage qui provoquent, souvent, une forte concentration de contraintes à l'extrémité de la contre-bride, pouvant aller jusqu'à l'endommagement ou même la destruction de la fonction étanchéité.

De ce fait, les manchons usuels à talons souples ne peuvent être utilisés que pour des pressions de service modérées.

Pour remédier à ces inconvénients, des solutions de talons rigides, à large surface de contact avec la bride ont été proposées. C'est, en effet, la solution adoptée par Kléber Industrie pour ses brides intégrées de tuyau, système Endflex (décrit dans le catalogue de tuyau Performer AD10, page 4) ou encore dans ses manchons de dilatation Dilatoflex K décrits dans le catalogue FC175-18 de juin 1984.
Ces dispositifs présentent, tous, une grande rigidité et sont, le plus souvent réalisés avec des éléments métalliques. De par leur conception, le caoutchouc se trouve comprimé sur une large surface d'appui, ce qui améliore la répartition des contraintes et réduit la sensibilité au fluage du caoutchouc, assurant, de ce fait, une meilleure garantie d'étanchéité et une possibilité d'utilisation à des pressions de service élevées.
Par contre, ces talons présentent, en raison de leur rigidité, l'inconvénient d'interdire le montage de contre-brides monoblocs après fabrication du manchon. Il est donc nécessaire de procéder au montage desdites contre-brides en cours de production et de vulcaniser le manchon, ainsi équipé de ses pièces métalliques, qui en augmentent considérablement le poids et le volume.
En outre, les contre-brides ne sont plus démontables comme le montrent les catalogues Stenflex et General Rubber. Le fabricant des manchons doit alors constituer un stock important afin de disposer de manchons équipés de brides conformes aux différents raccordements normalisés.

Un manchon à brides démontables est décrit dans le brevet FR 2 447 512 mais les talons sont rigides et comportent des collerettes de renforcement séparées du manchon. La solution proposée, qui consiste à entourer la collerette par une forme de caoutchouc en U, nécessite la réalisation d'un moule très complexe.

A la suite de cette analyse, Caoutchouc Manufacturé et Plastiques a déposé les trois brevets EP 0 196 954, EP 0 202 131 et EP 0 207 813 dans lesquels l'armature rigide constituant l'épaulement devenue rigide après passage par l'ouverture de la paroi ou contre-bride, par pliage dans le sens axial - est soit fractionnable mécaniquement, soit fragmentée et réalisée en éléments individuels, soit constituée de secteurs solidaires d'un élément de liaison souple.
Ces trois variantes, comportant une armature dont les composants diffèrent, apportent, dans chaque cas, une possibilité de pliage dans le sens axial, c'est à dire autour d'axes radiaux convergents. Dans cette opération, un nombre entier, soit deux, soit trois secteurs sont refoulés vers l'arrière du manchon et permettent le rabattement des secteurs conjugués, vers l'avant, jusqu'à leur engagement dans l'alésage de la contre-bride. Cette opération, peu mécanisable, avantageuse par la réduction des stocks de contre-brides et des manchons de types différents, est nécessaire pour permettre l'approvisionnement à la demande d'une grande variété de combinaisons. Elle est appliquée effectivement à des manchons de petit diamètre, ce qui pour l'industrie des raccords de dilatation, se situe à des diamètres nominaux inférieurs à 400 millimètres de passage libre.

La présente invention propose un autre mode de déformation dans un seul plan, utilisable pour les structures tubulaires souples de plus grandes dimensions, afin de regrouper les avantages des différents types de talons souples connus, sans en subir les inconvénients.

Elle utilise le principe d'une chaîne sans fin, articulée dans un seul plan, autour d'axes parallèles à l'axe du manchon, et sa mise en oeuvre est bien décrite par l'expression "mise en forme de haricot".

Cette déformation permet à un assemblage articulé d'éléments suffisamment nombreux - mais de largeur notable, permettant la constitution d'un talon robuste après remise au rond - de franchir l'ouverture d'une contre-bride sans détérioration des parois du talon.

L'invention consiste en une structure tubulaire souple s'ancrant sur l'ouverture d'une paroi rigide ou une contre-bride tournante et comportant un talon muni d'une armature de renfort, articulée, constituée par une chaîne sans fin d'éléments individuels, plats, noyés au sein de la paroi souple en composition élastomérique.

L'invention est caractérisée en ce que lesdits éléments individuels s'articulent autour d'axes parallèles à l'axe de la structure tubulaire souple et en ce que la déformation élastique, en forme de haricot, dudit talon de renforcement lui permet de se glisser dans un alésage de la paroi rigide ou contre-bride rigide sans altérer la résistance de son ancrage radial après remise au rond.

Les caractéristiques et variantes de l'invention seront mieux comprises à la lecture de la description accompagnant les dessins dans lesquels :
- la figure 1 est une demi-coupe diamétrale d'un manchon de dilatation conforme à l'invention ;
- la figure 2 est une vue à plat de l'assemblage articulé avant incorporation dans un talon de renforcement ;
- la figure 3 détaille, en vue et coupe, deux éléments individuels de l'assemblage articulé avant l'opération d'assemblage ;
- la figure 4 décrit, par une vue selon l'axe, la déformation nécessaire à l'opération de montage sur la contre-bride ;
- la figure 5 regroupe d'autres types de déformations possibles au cours de ladite opération de montage ;
- la figure 6 montre, en écorché, dans le plan de l'armature de renfort, et en coupe explicitant cet écorché, la composition d'un manchon fabriqué à plat ;
- la figure 7 regroupe en silhouettes les formes maximales, moyennes et minimales permises au talon de renforcement ;
- la figure 8 illustre, en demi-coupe axiale, l'application possible du talon de renforcement articulé à une manchette à vide ou manchon supportant une pression extérieure.

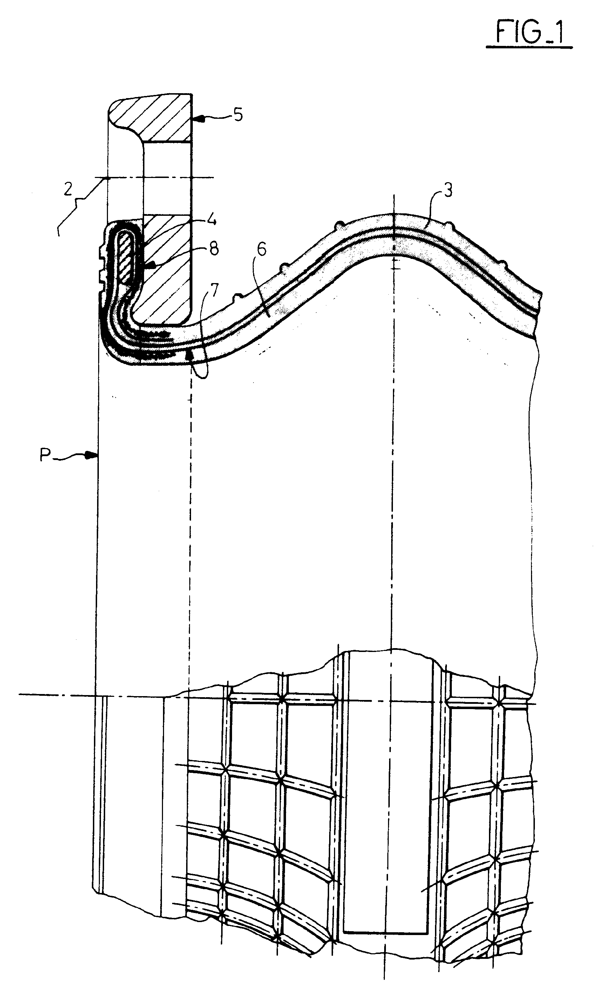

La figure 1 représente, en demi-coupe diamétrale, un manchon de dilatation (1), dont un talon de renforcement (2) sert d'ancrage à sa paroi souple (3), par le retournement autour d'une armature de renfort (4) et par le serrage sur le plan de fixation (P) au moyen de la contre-bride rigide (5), de la carcasse de cablés (7), textiles ou métalliques, noyés dans la paroi en composition élastomérique (6). La remontée (8) de cette structure cablée, généralement constituée d'un nombre pair de plis orientés symétriquement, derrière l'armature de renfort (4) assure, par le pincement des extrêmités des fils de cette carcasse de cablés (7), un ancrage positif aux efforts radiaux qui peut atteindre la résistance à la rupture de ces fils.

Un tel ancrage est rendu possible, après remise au rond, par la résistance à la compression circonférentielle, sous l'effet d'une force centripète de cette armature de renfort (4).

Pour le passage dans l'alésage de la contre-bride, nécessaire au montage, ladite armature de renfort (4) présente, néanmoins, une possibilité de flexion à double courbure, décrite par la forme d'un haricot.

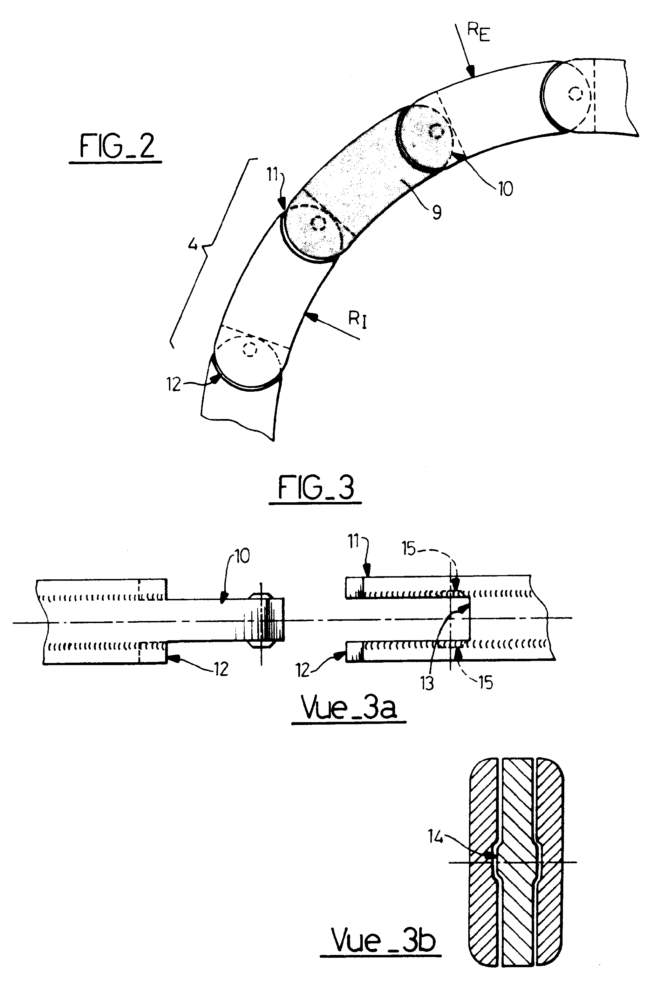

La figure 2 montre, à plat, la constitution d'une armature de renfort (4) selon l'invention, composée d'un nombre adéquat d'éléments individuels (9), imbriqués les uns dans les autres, pour constituer une chaîne sans fin, dont les formes extérieures sont très proches de celles d'un anneau rigide plat, utilisé dans l'art antérieur comme renfort de talon d'un manchon souple de dilatation, par exemple.

Un élément individuel (9) se présente comme une plaque à faces parallèles, découpée en forme de secteurs circulaires de rayon moyen extérieur (RE) et rayon moyen intérieur (RI). Le concepteur choisit le nombre de secteurs, par exemple de 36 ou 40, pour constituer un cercle parfait. De cette façon une armature de renfort, sensiblement circulaire, peut être constituée, de façon polygonale, par un nombre différent, supérieur ou inférieur de quelques unités, dans des talons de différents diamètres nominaux, pour la même gamme de structures tubulaires souples.

En plaquant l'une sur l'autre une extrêmité prise en chape (10) et une extrêmité formant chape (11), en appui par la surface courbe (12), de même courbure sur deux éléments individuels voisins, il est ainsi possible de constituer des anneaux rigides, quasi-circulaires, de section constante, utilisables comme armatures de renfort des talons de structures tubulaires souples d'une grande partie de la gamme.

Les diamètres nominaux sont le plus fréquemment étagés de 100 en 100 millimètres, dans les grands diamètres (supérieurs à 1000 mm) des séries métriques, et de 50 en 50 millimètres pour les applications comprises entre 400 et 1000 mm de diamètre.
En pratique, les périmètres des anneaux rigides constitutifs des armatures de renfort (4) diffèrent entre eux par exemple de 320 et 160 millimètres.

La longueur des éléments individuels (9) est préférentiellement choisie comme un sous-multiple de ces longueurs, par exemple 40 mm, et les armatures de renfort diffèreront de 4 éléments individuels ; par exemple la série des nombres 32 - 36 - 40 - 44 - 48 est un moyen de constituer une gamme d'armatures de renfort à partir des mêmes éléments individuels (9). Les rayons moyens RE et RI des éléments individuels (9) correspondent à un cercle parfait pour le nombre 40 et à une forme polygonale peu différente, pour les autres.

La figure 3 reprend, en vue et en coupe, le détail du raccordement entre deux éléments individuels (9).

La vue 3a rappelle, vue de l'extérieur et avant assemblage, que le contact entre une extrêmité prise en chape (10) et une extrêmité formant chape (11) se fait par toute une surface courbe (12) qui vient en appui lors de la compression radiale de l'anneau formant armature de renfort. Au fond de la chape (13) la composition élastomérique, constitutive de la paroi du talon de renforcement, peut s'introduire lors de la vulcanisation sous pression de la structure tubulaire souple enfermée dans un moule.

Les cablés de la carcasse, par exemple en textile à haute résistance, qui sont rabattus, lors de la confection, par dessus l'armature de renfort ne rencontrent, par contre, grâce à la forme courbe de la surface de raccordement, aucune lacune de celle-ci dans laquelle ils pourraient venir se pincer.

Il en résulterait une localisation des contraintes, préjudiciable, lors de la tension en fatigue alternée. La vue 3b montre la coupe, valable pour toute la section d'une armature de renfort présentant des angles arrondis pour permettre le rabattement.

Les éléments individuels sont réalisés soit en fonte d'acier, soit en fonte d'aluminium, ce qui permet une certaine précision dans la mise en chape et le perçage d'un alésage pour enfiler un axe au centre de courbure des surfaces courbes (12).
Plus avantageusement encore, ils peuvent être réalisés en polymère rigide, éventuellement renforcé, par exemple de fibres de verre, et comporter des bossages (14) sur l'extrêmité prise en chape (10) et des creux associés (15) dans l'extrêmité formant chape (11). Le léger forçage qu'autorise leur déformabilité permet de constituer une chaîne en "clipsant" les éléments individuels (9) les uns sur les autres, afin de réaliser des armatures de renfort (4) aisément manipulables en confection.

Ainsi, les différents diamètres de structures tubulaires souples, utilisant une armature de renfort (4) ayant le même type d'éléments individuels, permettent une fabrication en grande série de ceux-ci, avec une précision géométrique satisfaisante.

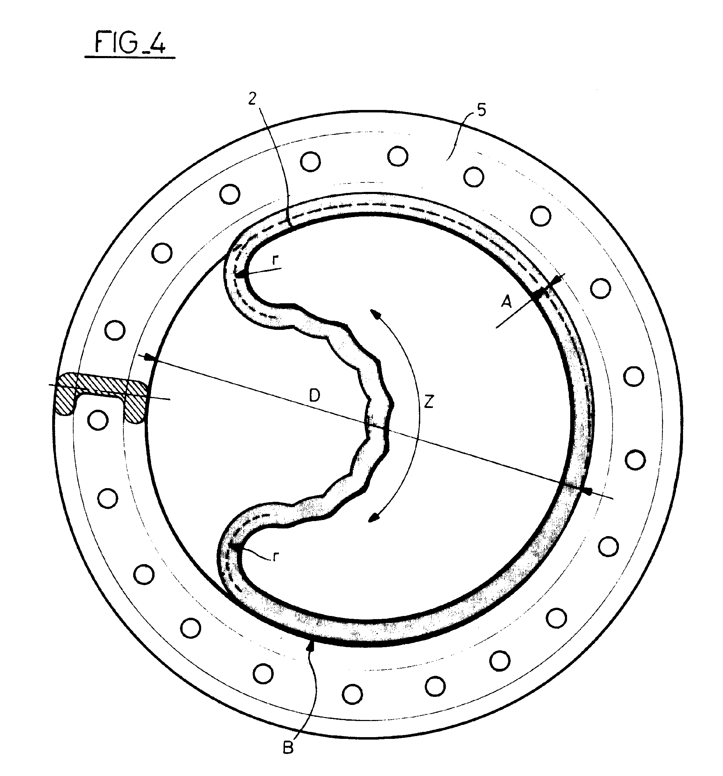

La figure 4 est une vue selon l'axe, montrant la déformation subie par un talon de renforcement (2) selon l'invention, au cours de l'introduction dans l'alésage de la contre-bride rigide (5). Dans un exemple numérique l'opération concerne le passage d'un diamètre extérieur de talon de 1091 mm dans un alésage de 1025 mm, pour un diamètre nominal de la structure tubulaire souple de 1000 mm.

Il est à noter que la gorge qui fait suite au talon est utilisée du côté (A) pour engager en oblique le talon de renforcement (2) dans l'alésage de diamètre (D). La réduction d'encombrement qui permet d'engager, en léger oblique, le talon de renforcement (2) sur le second côté (B) n'exige que la dimension (D) + (une épaisseur de talon), ce qui limite, avantageusement, la déformation nécessaire, en particulier dans les zones pliées à un rayon moyen (r).

Quoique contenue rigoureusement dans un plan, la déformation élastique du talon de renforcement (2) dégageant suffisamment son bord extérieur pour le passage dans l'alésage (D) a comme ordre de grandeur une évolution du rayon initial (RE + RI)/2 vers un rayon quatre fois plus faible (r). C'est à dire que l'angle entre les axes des éléments individuels voisins, emboîtés, qui, au repos est de l'ordre de 9 à 10 degrés, est multiplié par quatre, dans la zone déformée de rayon moyen (r), au cours de la déformation temporaire.

La déformation qui s'exerce sur les couches de cablés d'armatures entourant les éléments individuels est encore du même ordre de grandeur, mais elle est appliquée en sens inverse, dans la zone à courbure inversée (Z) qui relie les deux rayons moyens (r) : à l'intérieur dans la zone pliée à rayon moyen (r) et à l'extérieur pour la zone à courbure inversée (Z), la rotation entre éléments individuels risque de comprimer les cablés d'armature par cisaillement de l'ordre de 27 à 30 degrés, ce qui constitue la limite de déformation autorisée.
A l'extérieur de la zone pliée de rayon moyen (r) et à l'intérieur de la zone à courbure inversée (Z), c'est un allongement que risquent de supporter les cablés d'armature ; mais ceux-ci se trouvent, opportunément, déjà écartés par l'épanouissement des nappes qui ne sont jointives que sur le diamètre nominal de la structure tubulaire souple.

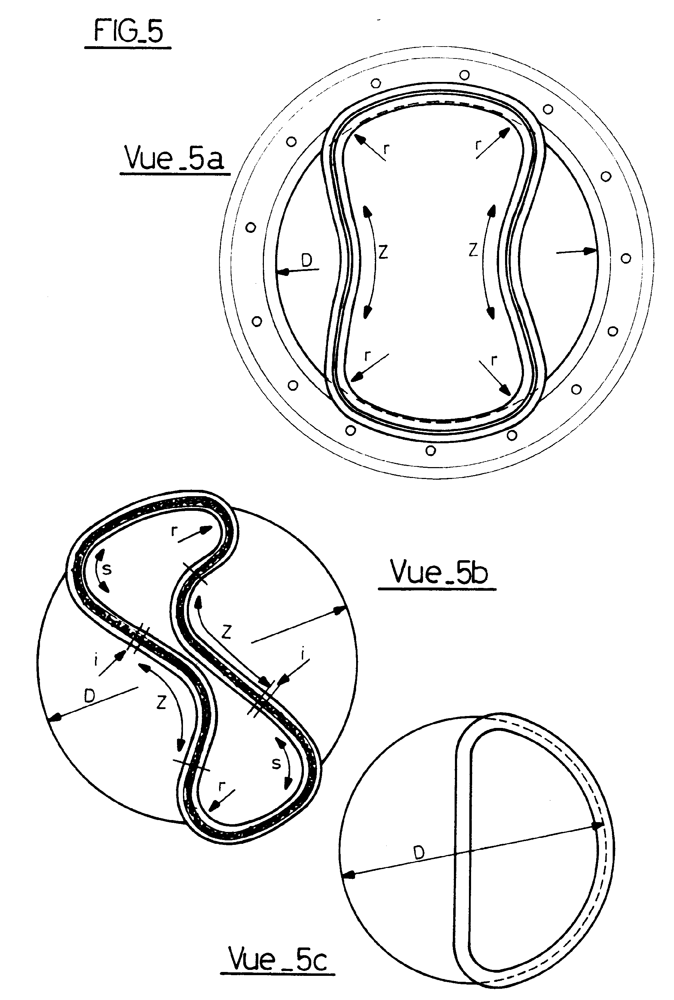

La figure 5 montre, dans les mêmes conditions que la précédente, les autres types de déformations qui peuvent être pratiquées dans le même but, en fonction des rigidités propres des talons des structures tubulaires souples ainsi renforcées.

La vue 5a illustre une solution à deux axes de symétrie, dans laquelle le périmètre du talon de renforcement prend une forme d'"osselet" ayant quatre zones pliées de rayon moyen (r), réduit vers une valeur voisine de D/8.

Deux zones à courbure inversée (Z), qui leur sont adjacentes, forcent, par courbure inverse, les rotations relatives des éléments individuels.

La vue 5b est une variante de la précédente où une minime dissymétrie des rayons moyens (r) permet à deux zones moins courbées (s) de se juxtaposer à deux courtes zones à courbure inversée (Z), venues en appui l'une sur l'autre près des zones en inflexion (i) qui séparent une zone moins courbée (s) et une zone à courbure inversée (Z).
Le choix entre les différentes solutions est régi expérimentalement, par l'élasticité des cablés enveloppant l'armature de renfort ; celle-ci favorise l'une ou l'autre des flexions depuis un rayon moyen D/2 au repos vers D/8 ou même D/10 dans un sens, et vers (-D) environ dans l'autre sens, cas le plus destructif.

La vue 5c montre le résultat d'un calcul théorique de courbures : de rayon moyen D/2, au repos, l'armature de renfort d'un talon subit la même rotation, mais en sens inverse, pour venir au rayon moyen D/10 que pour venir à un alignement des éléments individuels. Pour rétablir le périmètre initial, une zone à courbure inversée (Z) s'avère nécessaire au cours d'une manoeuvre dynamique de courte durée.

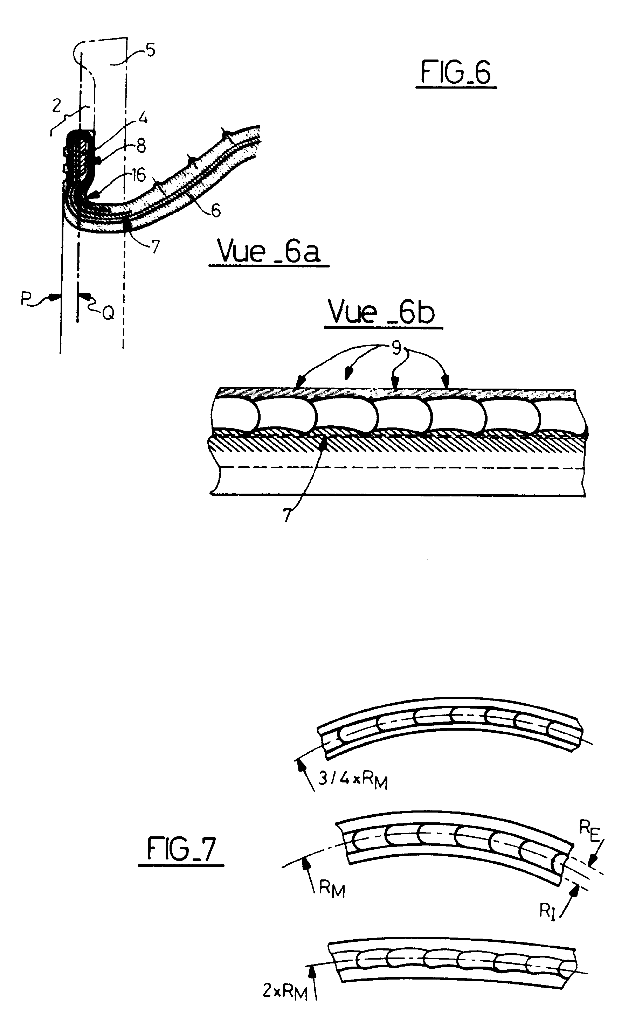

La figure 6 s'applique à une extension avantageusement permise vers les très grands diamètres de structures tubulaires souples, c'est-à-dire au delà de 1000 mm de diamètre nominal, par la configuration des armatures de renfort constituées d'éléments individuels selon l'invention. L'application n'est pas limitée vers les plus grandes dimensions, circulaires ou non.

La coupe axiale rappelée en vue 6a présente les mêmes apparences que la figure 1 se rapportant à un manchon fabriqué de façon circulaire.

Elle permet d'expliquer un procédé de fabrication d'une structure tubulaire souple, sous forme développée rectiligne, c'est à dire vulcanisée par passes successives sous une presse de grande longueur. La structure tubulaire souple est, le plus généralement, munie d'une onde et de talons, réalisables dans la forme développé rectiligne. La vue 6b représente un écorché ou coupe suivant le plan (Q). La mise en sans fin de ladite bande fabriquée sous forme développée rectiligne se fait par rapprochement et jonctionnement de ses extrémités dépourvues de talons.
Elle se pratique dans un moule de jonctionnement, après décorticage des différents plis de la carcasse de cablés (7), adjonction dans l'armature de renfort (4) d'un (ou plusieurs) élément(s) individuel(s) (9) nécessaires à l'obtention du périmètre désiré, recouvrement des plis de la carcasse de cablés (7) et apport éventuel de matière pour reconstituer la paroi souple en composition élastomérique (6).

La figure 7 regroupe la silhouette schématique des anneaux servant d'armatures de renfort dans les diamètres des structures tubulures souples minimaux, moyens et maximaux autorisés par ce procédé de fermeture d'une armature de renfort articulée. Par exemple, si la valeur moyenne du rayon est (RM), la valeur minimale est de l'ordre de 3/4 (RM), la valeur maximale étant de l'ordre de deux fois (RM), pour une gamme donnée de structures tubulures souples. En effet (en se référant à la fig. 6a) une bonne continuité de l'enveloppement par les plis de la carcasse de cablés (7) passant autour de l'armature de renfort (4) et rabattus en remontée de la structure cablée (8) exige, lors de la fabrication, même à plat, la constitution de l'armature de renfort (4) par des éléments individuels (9) de profil courbes. Si ces éléments étaient rectilignes, toute armature resterait polygonale.
Un diamètre nominal de manchon moyen correspond alors à une courbure continue selon les rayons moyens extérieur (RE) et intérieur (RI) de l'armature de renfort (4).

Cette position est obtenue par légère déformation permanente de la matière constituant le manchon.

Par ailleurs, une valeur légèrement plus élevée ou plus faible de cette déformation permanente suffit pour la réalisation de manchons de diamètres plus petits ou plus grands ; en particulier, une déformation quasi-nulle permet d'accroître les possibilités de réalisation dans cette gamme jusqu'aux plus grands diamètres. Les investissements en moyens de fabrication sont alors considérablement réduits par rapport aux besoins de l'art antérieur. La légère excroissance (16) dont est nantie la section de la contre-bride rigide (5) sert à exclure tout risque d'instabilité due à un quasi-alignement dans les très grands diamètres, en venant s'appuyer après l'assemblage derrière le talon de renforcement (2), lorsque s'exerce une compression circonférentielle intense sur l'armature de renfort (4).

En effet, la présente technique, contrairement aux systèmes à pincement du type bande plate, permet, par l'existence d'un robuste talon - qui devient rigide après assemblage des contre-brides - l'utilisation sous pressions élevées, même dans les très grands diamètres : la résistance de l'ancrage centripète de la carcasse de cablés n'est limitée que par la résistance à la compression circonférentielle de l'anneau rigide constitué par l'alignement dans le talon de renforcement des différentes surfaces courbes (12) d'appui entre éléments individuels (9). Il faut atteindre plusieurs mètres de diamètre pour que cette résistance à la compression circonférentielle compromette les possibilités de cette extension de gamme dans les fortes pressions, puisqu'une instabilité au flambage est exclue par l'existence de la légère excroissance (16).

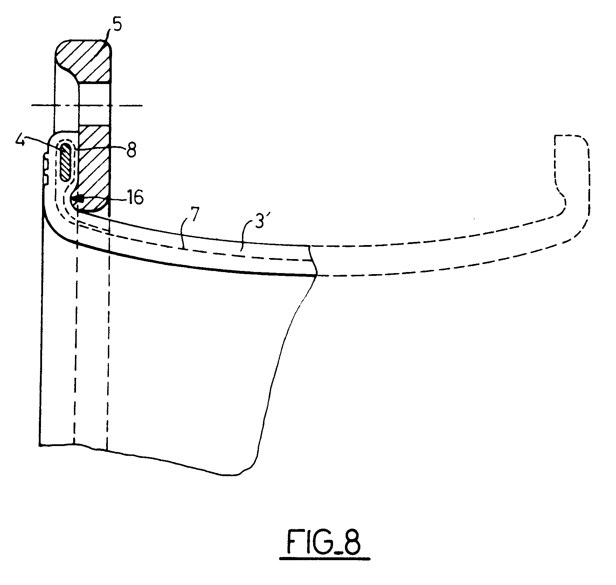

La figure 8 est une demi-coupe axiale qui reprend la même technique, avec les mêmes références que la description de la figure 1, mais en application à une manchette à vide, ou plus généralement à un manchon de paroi souple (3') soumis à une surpression extérieure qui peut, dans des usages particuliers, dépasser un bar par rapport à la pression de fluide circulant à l'intérieur.

En effet, l'ancrage contre les efforts centripètes provoqués par la remontée de la structure cablée (8) autour de l'armature de renfort (4) permet aussi efficacement à la carcasse de cablés (7) de résister aux efforts subis par la paroi souple (3') disposée pour résister à une dépression importante ou à une pression différentielle supérieure à 1 bar, ceci quel qu'en soit le diamètre.

Un moule rectiligne de grande longueur, dont la section droite est représentée par cette figure, et un moule de raccordement approprié, permettent la réalisation de manchettes à vide de très grande robustesse malgré leur grand diamètre, grâce au jonctionnement d'éléments fabriqués sous forme rectiligne.

Les différentes limites de courbure, dans une même gamme comme définies en figure 7 pour des manchons soumis à une pression interne permettent, là encore, la constitution d'une nouvelle gamme de manchettes à vide de grande robustesse, particulièrement utiles dans l'industrie des condenseurs de centrales thermiques ou de dessalement d'eau de mer, sans nécessiter la création d'outillages pour chaque dimension désirée.

Dans ce cas également, la mise en sans fin sur le chantier permet la réparation sur place ou la disposition autour de composants indémontables souvent demandée dans cette industrie.

En résumé, la technique de montage de manchons de dilatation sur leurs contre-brides ou, plus généralement, de toute structure tubulaire souple en appui sur l'ouverture d'une paroi rigide, que permet l'usage de l'armature articulée pour talon de renforcement selon l'invention, apporte les avantages suivants :
- le montage aisé, par le distributeur par exemple, limite le stock dans chaque dimension - d'une part des contre-brides, avec éventuellement perçage aux différentes normes - d'autre part de manchons aux différentes qualités de résistance aux fluides transportés, ou par exemple de plusieurs longueurs axiales et donc de courses élastiques différentes.
   Le stockage de nombreuses combinaisons est donc évité. - d'autre part, les délais de livraison au client se trouvent notablement réduits, lorsqu'une adaptation à une installation exige des brides spéciales, qu'il n'est donc plus nécessaire d'envoyer en atelier de fabrication des manchons.
- la flexibilité du procédé de constitution des armatures de renfort - puisqu'un seul type d'éléments individuels permet la réalisation de plusieurs diamètres - réduit considérablement les nécessités d'approvisionnement intermédiaire d'armatures pour talons, et par conséquent les délais de fabrication de manchons hors-stock réalisés à la demande, de même que les diamètres non standards.
- le jonctionnement de bande continue offre la possibilité de réalisation de manchons de très grandes dimensions, circulaires ou non, néammoins pour fortes pressions, sans investissements notables, ainsi que celle de manchettes à vide ou manchons pour pressions extérieures élevées.
- la réparation sur site devient possible, par des équipements appropriés, ainsi que la constitution, en place, du manchon autour de composants indémontables. De plus, un manchon terminé peut être manipulé, grâce à sa déformabilité, dans un passage limité de dimensions inférieures à son diamètre.

Enfin, le stockage du matériel de rechange, pour des pièces de sécurité devant être disponibles sur site, est infiniment simplifié sous forme rectiligne de longueur quelconque jonctionnable.

## Revendications

1. Structure tubulaire souple s'ancrant sur l'ouverture d'une paroi rigide ou une contre-bride tournante et comportant un talon (2) muni d'une armature de renfort (4), articulée, constituée par une chaîne sans fin d'éléments individuels (9), plats, noyés au sein de la paroi souple (3) en composition élastomérique, caractérisée en ce que lesdits éléments individuels (9) s'articulent autour d'axes parallèles à l'axe de la structure tubulaire souple et en ce que la déformation élastique, en forme de haricot, dudit talon de renforcement (2), lui permet de se glisser dans un alésage de diamètre (D) de la paroi rigide ou contre-bride rigide (5) sans altérer la résistance de son ancrage radial après remise au rond.

2. Structure tubulaire souple comportant un talon (2) muni d'une armature de renfort (4), articulée, selon la revendication 1, caractérisée en ce que la déformation de ladite armature de renfort (4) se fait par rotation réciproque des extrêmités prises en chape (10) et des extrêmités formant chape (11) d'éléments individuels (9), de rayon moyen extérieur (RE) et de rayon moyen intérieur (RI) en nombre nécessaire pour réaliser un anneau rigide reprenant une forme de cercle parfait après la remise au rond.

3. Structure tubulaire souple comportant un talon (2) muni d'une armature de renfort (4), articulée, selon la revendication 1, caractérisée en ce que ladite armature de renfort (4) est formée de façon polygonale par un nombre d'éléments individuels (9) supérieur ou inférieur au nombre formant un anneau rigide circulaire, lesdits éléments individuels (9) s'appuyant les uns les autres par une surface courbe (12).

4. Structure tubulaire souple comportant un talon (2) muni d'une armature de renfort (4), articulée, selon l'une des revendications 2 ou 3, caractérisé en ce que l'articulation entre éléments individuels (9), au cours de la manoeuvre d'engagement du talon de renforcement (2) dans l'alésage de diamètre (D) de la contre-bride rigide (5), se fait autour de bossages (14) disposés sur les extrêmités prises en chape (10) et de creux associés (15) disposés dans les extrêmités formant chape (11).

5. Structure tubulaire souple comportant un talon (2) muni d'une armature de renfort (4), articulée, selon la revendication 4, caractérisée en ce que les éléments individuels (9) sont réalisés en polymère rigide, renforcé ou non de fibres de verre, dont la déformabilité permet, par clipsage, la constitution de la chaîne sans fin.

6. Structure tubulaire souple comportant un talon (2) muni d'une armature de renfort (4), articulée, selon l'une des revendications 1 à 5, caractérisée en ce que les éléments individuels (9) présentent un profil courbe et en ce que ladite structure tubulaire souple est constituée d'une bande développée, fabriquée à plat, mise en sans fin par jonctionnement de ses extrémités dépourvues de talons de renforcement (2).

7. Structure tubulaire souple comportant un talon (2) muni d'une armature de renfort (4), articulée, selon la revendication 6, caractérisée en ce que l'ancrage de sa paroi souple (3') permet son utilisation sous dépression interne ou surpression externe.

## Patentansprüche

1. Flexible rohrförmige Struktur, die sich an der Öffnung einer starren Wand oder eines losen Gegenflansches verankert und einen Ansatz (2) aufweist, der mit einer mit Gelenken versehenen Verstärkungseinlage (4) versehen ist, die von einer Endloskette aus flachen, in die aus einer Elastomer-Mischung bestehende flexible Wand (3) eingebetteten Einzelelementen (9) gebildet ist, dadurch gekennzeichnet, daß die besagten Einzelelemente (9) um zur Achse der flexiblen rohrförmigen Struktur parallele Achsen gelenkig miteinander verbunden sind und dadurch, daß der besagte Verstärkungsansatz (2) aufgrund elastischer, bohnenförmiger Verformung durch eine Bohrung eines Durchmessers (D) der starren Wand oder des starren Gegenflansches (5) hindurchgeführt werden kann, ohne dadurch die Festigkeit seiner radialen Verankerung nach der Wiederherstellung der Rundform zu verändern.

2. Flexible rohrförmige Struktur mit einem Ansatz (2), der mit einer mit Gelenken versehenen Verstärkungseinlage (4) versehen ist nach Anspruch 1, dadurch gekennzeichnet, daß die Verformung der besagten Verstärkungseinlage (4) durch entgegengesetzte Rotation der in eine Gelenkgabel aufgenommenen Enden (10) und der die Gelenkgabel bildenden Enden (11) von Einzelelementen (9) erfolgt, wobei die Einzelelemente einen mittleren äußeren Radius (RE) und einen mittleren inneren Radius (RI) aufweisen und in erforderlicher Anzahl vorhanden sind, um einen starren Ring zu bilden, der nach der Wiederherstellung der Rundform wieder eine vollkommene Kreisform annimmt.

3. Flexible rohrförmige Struktur mit einem Ansatz (2), der mit einer mit Gelenken versehenen Verstärkungseinlage (4) versehen ist nach Anspruch 1, dadurch gekennzeichnet, daß die besagte Verstärkungseinlage (4) in polygonaler Weise durch eine Anzahl von Einzelelementen (9) gebildet ist, die größer oder kleiner ist als diejenige Anzahl, durch die ein starrer kreisförmiger Ring gebildet wird, wobei die besagten Einzelelemente (9) sich an einer gekrümmten Oberfläche (12) aneinander abstützen.

4. Flexible rohrförmige Struktur mit einem Ansatz (2), der mit einer mit Gelenken versehenen Verstärkungseinlage (4) versehen ist nach einem der Ansprüche 2 oder 3, dadurch gekennzeichnet, daß die Gelenksbewegung zwischen Einzelelementen (9) im Verlauf des Einsetzens des Verstärkungsansatzes (2) in die Bohrung des Durchmessers (D) des starren Gegenflansches (5) rund um Erhöhungen (14) herum, die sich an den in die Gelenkgabel aufgenommenen Enden (10) befinden, und rund um zugeordnete Vertiefungen (15) herum, die sich an den die Gelenkgabel bildenden Enden (11) befinden, erfolgt.

5. Flexible rohrförmige Struktur mit einem Ansatz (2), der mit einer mit Gelenken versehenen Verstärkungseinlage (4) versehen ist nach Anspruch 4, dadurch gekennzeichnet, daß die Einzelelemente (9) aus starrem, mit Glasfasern verstärktem oder nicht verstärktem Polymer gefertigt sind, dessen Verformbarkeit die Bildung der Endloskette durch Zusammenklipsen ermöglicht.

6. Flexible rohrförmige Struktur mit einem Ansatz (2), der mit einer mit Gelenken versehenen Verstärkungseinlage (4) versehen ist nach einem der Ansprüche 1 bis 5, dadurch gekennzeichnet, daß die Einzelelemente (9) ein gekrümmtes Profil aufweisen und dadurch, daß die besagte flexible rohrförmige Struktur aus einem in einer Ebene abgewickelten und hergestellten Band gebildet ist, das durch Zusammenfügen seiner der Verstärkungsansätze (2) entbehrenden Enden in Endlosform gebracht wird.

7. Flexible rohrförmige Struktur mit einem Ansatz (2), der mit einer mit Gelenken versehenen Verstärkungseinlage (4) versehen ist nach Anspruch 6, dadurch gekennzeichnet, daß die Verankerung ihrer flexiblen Wand (3') ihren Einsatz bei innerem Unterdruck oder äußerem Überdruck ermöglicht.

## Claims

1. A flexible tubular structure anchored to the opening of a rigid wall or a rotating counter-flange and comprising a bead (2) provided with an articulated reinforcing piece (4), constituted by an endless chain of individual flat elements (9) embedded within the flexible wall (3) of elastomeric composition, characterised in that said individual elements (9) are articulated around axes parallel to the axis of the flexible tubular structure and in that bean-shaped elastic deformation of said reinforcing bead (2), allows it to slide into a bore hole of diameter (D) in the rigid wall or rigid counter-flange(5) without impairing the strength of its radial anchoring after being made round again.

2. A flexible tubular structure comprising a bead (2) provided with an articulated reinforcing piece (4), according to Claim 1, characterised in that the deformation in said reinforcing piece (4) is effected by reciprocal rotation of the extremities caught inside fork joints (10) and the extremities forming fork joints (11) of the individual elements (9) having an average outer radius (RE) and an average inner radius (RI), sufficient in number to make a rigid ring recovering the shape of a perfect circle after being made round again.

3. A flexible tubular structure comprising a bead (2) provided with an articulated reinforcing piece (4), according to Claim 1, characterised in that said reinforcing piece (4) is formed like a polygon by a number of individual elements (9) greater or less than the number forming a rigid circular ring, said individual elements (9) bearing on each other by means of a curved surface (12).

4. A flexible tubular structure comprising a bead (2) provided with an articulated reinforcing piece (4), according to one of Claims 2 or 3, characterised in that, during the manoeuvre for engaging the reinforcing bead (2) in the bore of diameter (D) of the rigid counter-flange (5), the articulation between individual elements (9) takes place around bosses (14) disposed on the extremities caught inside fork joints (10) and associated recesses (15) disposed in the extremities forming fork joints (11).

5. A flexible tubular structure comprising a bead (2) provided with an articulated reinforcing piece (4), according to Claim 4, characterised in that the individual elements (9) are made of rigid polymer, reinforced or not with glass fibre, the deformability of which makes it possible to constitute an endless chain by means of clipping.

6. A flexible tubular structure comprising a bead (2) provided with an articulated reinforcing piece (4), according to one of Claims 1 to 5, characterised in that the individual elements (9) have a curved profile and in that said flexible tubular structure is composed of a developed strip, manufactured flat, and made endless by joining its extremities not having reinforcing beads (2).

7. A flexible tubular structure comprising a bead (2) provided with a reinforcing piece (4), according to Claim 6, characterised in that the anchoring of the flexible wall (3') means it can be used with a partial internal vacuum or external excess pressure.
